Europäisches Patentamt

European Patent Office

Office européen des brevets

(19)

(11) Veröffentlichungsnummer: **0 124 906**

**A2**

(12) # EUROPÄISCHE PATENTANMELDUNG

(21) Anmeldenummer: 84105203.8

(22) Anmeldetag: 08.05.84

(51) Int. Cl.³: **H 04 L 1/10**
**H 04 J 3/07**

(30) Priorität: 10.05.83 DE 3317116

(43) Veröffentlichungstag der Anmeldung:
14.11.84 Patentblatt 84/46

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: Strehl, Herbert, Dipl.-Ing.
Drozzaweg 15
D-8000 München 70(DE)

(54) **Digitalsignal-Multiplexgerät.**

(57) Das Digitalsignal-Multiplexgerät wenigstens einen Multiplexer (1, 2) und wenigstens einen Demultiplexer (6, 7) für Pulsrahmen mit mehreren Nutzinformationskanälen. Im Sendeteil befindet sich ein Datensicherungscoder (3) und im Empfangsteil ein Datensicherungsdecoder (5). Der Datensicherungscoder (3) erzeugt einen Fehlersicherungscode und belegt mit der Fehlersicherungsinformation einen oder mehrere Nutzinformationskanäle oder ganzzahlige Teile wenigstens eines Nutzinformationskanals im Pulsrahmen.

Diese werden empfangsseitig dem Datensicherungsdecoder (5) zugeführt, der Fehler in allen oder einzelnen Kanälen des übertragenen Zeitmultiplexsignals erkennt und korrigiert. Auf diese Weise können alle oder einzelne beispielsweise für die Datenübertragung vorgesehene Nutzinformationskanäle mit geringerer Bitfehlerquote übertragen, ohne dabei die genormten Hierarchiestufen der Übertragungssysteme zu verlassen.

FIG 5

EP 0 124 906 A2

0124906

Siemens Aktiengesellschaft
Berlin und München

Unser Zeichen
VPA 83 P 1327
Auslandsfassung

## Digitalsignal-Multiplexgerät

Die Erfindung bezieht sich auf ein Digitalsignal-Multiplexgerät mit wenigstens einem Multiplexer und wenigstens einem Demultiplexer für Pulsrahmen mit mehreren Nutzinformationskanälen.

Derartige Geräte sind beispielsweise aus der Zeitschrift "telecom-report", 2 (1979) Beiheft Digital-Übertragungstechnik, Seiten 46-51 und 59-64 bekannt. Pulsrahmen hierzu sind im CCITT-Yellow-Book, Vol.III, Fascicle III.3, "Digital-Networks - Transmission Systems and Multiplexing Equipment", Recommendation G.751, Seiten 144 bis 155 beschrieben.

Im heutigen analogen Fernmeldenetz werden etwa zehn Prozent der Übertragungskapazität für die Datenübertragung genutzt. Eine ähnliche Größenordnung kann auch in einem zukünftigen digitalen Fernmeldenetz erwartet werden. Aus wirtschaftlichen Gründen wurde die Übertragungsqualität des analogen Fernmeldenetzes den Forderungen des Fernsprechverkehrs angepaßt. Für die Datenübertragung ist eine wesentlich höhere Übertragungsqualität erforderlich, was beispielsweise durch Codierung und Datensicherung in den Endgeräten berücksichtigt wurde.

Auch das zukünftige digitale Fernmeldenetz wird aus wirtschaftlichen Gründen den Forderungen des Fernsprechverkehrs angepaßt werden müssen. Bei der Übertragung

Wke 1 Kom / 05.05.1983

0124906

von Daten- und Bildsignalen werden dadurch auch im digitalen Fernmeldenetz Vorkehrungen notwendig sein, um die bei diesen Signalen erforderliche bessere Übertragungsqualität zu gewährleisten. Man kann dazu die aus der Datenübertragung bekannten Methoden wie eine entsprechend fehlerunempfindliche Codierung im Endgerät anwenden.

Nach dem Buch von Swoboda "Codierung zur Fehlerkorrektur und Fehlererkennung", R. Oldenbourg Verlag, München-Wien, 1973 kann eine Datensicherung erreicht werden, wenn eine Quellencodierung in eine redundante Darstellung mit mehr Binärstellen überführt wird. Eine Verschlüsselung der Nachricht durch Codewörter mit einer festen Länge von n Stellen wird als Blockcodierung bezeichnet. Diese n Stellen enthalten m Nachrichtenstellen und k Kontrollstellen. Letztere werden aus den m Nachrichtenstellen nach einer vereinbarten Vorschrift, dem Fehlersicherungscode ermittelt. Das empfangsseitige Erkennen oder gar Korrigieren fehlerhafter Codewörter sowie das Umformen der Nachrichten in den ursprünglichen Quellencode wird als Decodieren bezeichnet.

Ein Fehlersicherungscode ist beispielsweise der aus "IEEE Trans.", IT-16 (1970)9, Seiten 649-650 bekannte Fire-Code.

Aufgabe der Erfindung ist es, für das digitale Fernmeldenetz unter Beibehaltung der dem Fernsprechverkehr angepaßten Übertragungsqualität eine Lösung anzugeben, mit der nur für die Datenübertragungskanäle eine höhere Übertragungsqualität, also kleinere Bitfehlerquoten erreicht werden, ohne dabei die genormten Hierarchiestufen für die Übertragungssysteme zu verlassen.

Ausgehend von einem Digitalsignal-Multiplexgerät mit wenigstens einem Multiplexer und wenigstens einem Demultiplexer für Pulsrahmen mit mehreren Nutzinformationskanälen, wird diese Aufgabe erfindungsgemäß dadurch gelöst, daß ein Datensicherungscoder vorgesehen ist, der dem Multiplexer zugeordnet ist, Fehler erkennt und einen oder mehrere Nutzinformationskanäle oder ganzzahlige Teile wenigstens eines Nutzinformationskanals mit Datensicherungsinformationen belegt und daß ein Datensicherungsdecoder vorgesehen ist, der dem Demultiplexer zugeordnet ist, dem die Datensicherungsinformation zugeführt wird und der eine Fehlerkorrektur durchführt.

Vorteilhaft ist es, wenn eine Datensicherung für wenigstens einen Teil der Nutzinformationskanäle vorgesehen ist.

Vorteilhaft ist es auch, wenn ein Datensicherungscoder und ein Datensicherungsdecoder vorgesehen sind, die ihre Blocksynchronisierung von der Rahmensynchronisierung des Multiplexers bzw. des Demultiplexers ableiten.

Im erfindungsgemäßen Digitalsignal-Multiplexgerät können prinzipiell alle bekannten Fehlersicherungscodes zur Datensicherung eingesetzt werden. Blockcodes lassen sich jedoch besser an die Blockstruktur des Pulsrahmens und an die Synchronisierung anpassen.

Die erfindungsgemäßen Digitalsignal-Multiplexgeräte ermöglichen es, in einem zukünftigen digitalen Fernmeldenetz mit Übertragungssystemen, die für den Fernsprechverkehr ausgelegt sind, beispielsweise einzelne 34-Mbit/s-Bündel mit wesentlich geringeren Bitfehler-quoten (beispielsweise $10^{-10}$) zu erhalten. Dabei ist es möglich, daß die geschützten Datenbündel über weitere normale Multiplexer in Übertragungssysteme mit höheren Hierarchiestufen wie 140 Mbit/s eingefügt werden.

0124906

Eine Kaskadierung der erfindungsgemäßen Digitalsignal-Multiplexgeräte in noch höhere Hierarchiestufen bringt eine noch bessere Übertragungsqualität. Es kommen beispielsweise Kabel-, Richtfunk-, Satelliten- und Lichtwellenleiter-Übertragungssysteme in Frage.

Mit der erfindungsgemäßen Lösung kann in einem zukünftigen digitalen Fernsprechnetz ohne Änderung der Qualität der Übertragungsgeräte ein Teil der Kanäle für beispielsweise den Datenverkehr mit höherer Übertragungsqualität geschaltet werden. Durch diese Art der Datensicherung wird auf Kosten eines kleinen Teils der Kanalkapazität (beispielsweise 6%) eine bessere Kanalqualität erzeugt, ohne die genormten Hierarchiestufen zu verlassen.

Anhand von Ausführungsbeispielen wird die Erfindung nachstehend näher erläutert.

Fig. 1 zeigt eine Kaskade von bekannten Digitalsignal-Multiplexgeräten,

Fig. 2 zeigt einen Pulsrahmen für ein 8-Mbit/s-Digitalsignal,

Fig. 3 zeigt einen Pulsrahmen für ein 34-Mbit/s-Digitalsignal,

Fig. 4 zeigt einen Ausschnitt eines 34-Mbit/s-Pulsrahmens mit Datensicherungsinformation,

Fig. 5 zeigt eine erste Variante des erfindungsgemäßen Digitalsignal-Multiplexgeräts und

Fig. 6 zeigt eine zweite Variante des erfindungsgemäßen Digitalsignal-Multiplexgerätes.

0124906

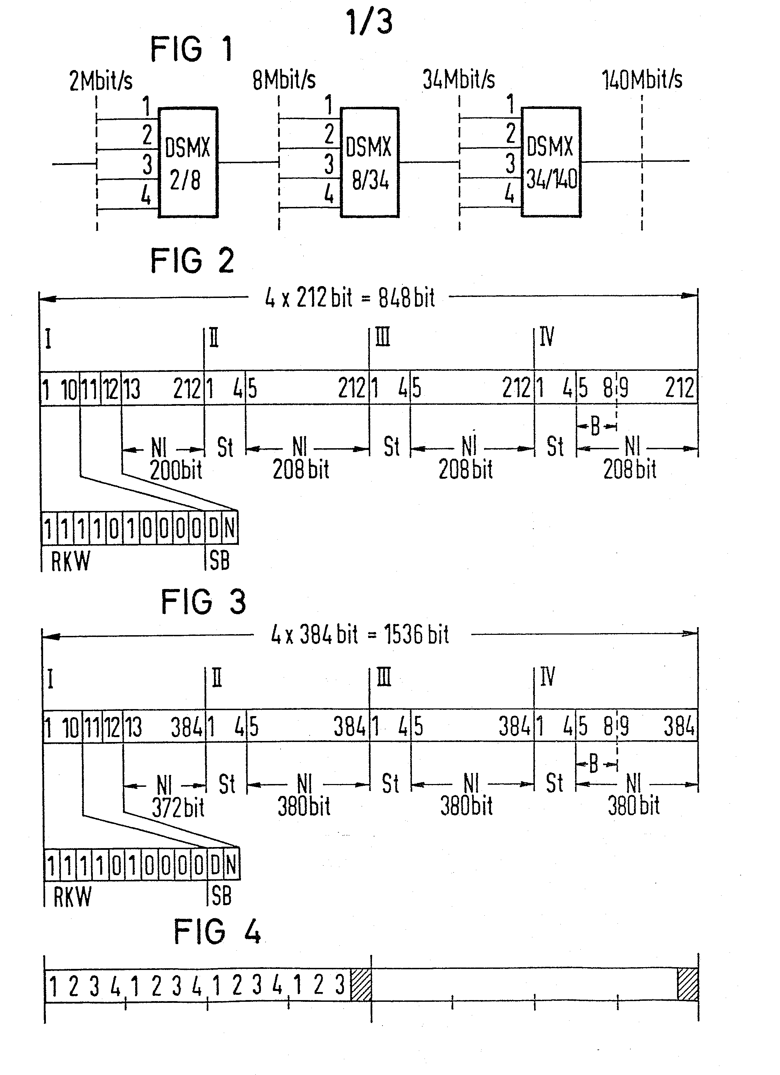

Figur 1 zeigt eine Kaskade aus drei bekannten Digital-signal-Multiplexgeräten. Das Digitalsignal-Multiplex-gerät DSMX 2/8 setzt vier 2-Mbit/s-Signale in ein 8-Mbit/s-Signal um, das Digitalsignal-Multiplexgerät DSMX 8/34 setzt vier 8-Mbit/s-Signale in ein 34-Mbit/s-Signal um und das Digitalsignal-Multiplexgerät DSMX 34/140 setzt schließlich vier 34-Mbit/s-Signale in ein 140-Mbit/s-Signal um.

Figur 2 zeigt den von CCITT genormte Pulsrahmen für das 8-Mbit/s-Digitalsignal und Figur 3 den für das 34-Mbit/s-Digitalsignal. Jeder Pulsrahmen ist in vier Blöcke I bis IV unterteilt. Mit NI sind Nutzinformationskanäle, mit St Stopfinformationen, mit B Stopf- oder Informa-tionsbits, mit RKW Rahmenkennnungswörter und mit SB Servicebits bezeichnet. Die Ziffern in den Blöcken bedeuten Bits.

Figur 4 bezieht sich auf die Verwendung eines 2-Mbit/s-Kanals für die Datensicherungsinformation. Speist man in Figur 1 in das Digitalsignal-Multiplexgerät DSMX 2/8 in den vierten Eingang, d.h. in den Nutzinformationskanal NI von Block IV des Pulsrahmens nach Figur 2 eine Datensicherungsinformation ein, dann erscheint diese in dem in Figur 4 teilweise dargestellten 34-Mbit/s-Multiplexrahmen an den schraffierten Stellen.

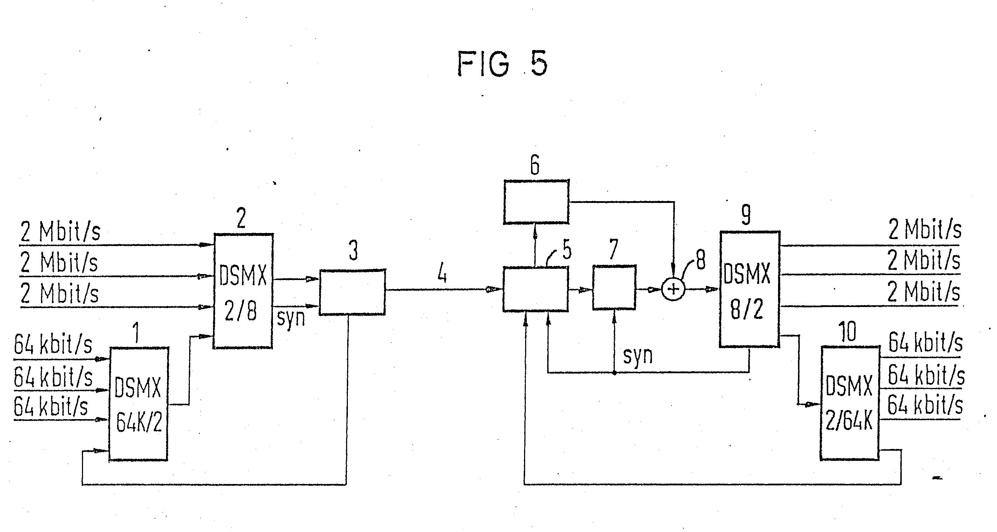

Figur 5 zeigt einen Sendeteil 1 bis 3 und einen Empfangsteil 5 bis 10 eines erfindungsgemäßen Digitalsignal-Multiplexgeräts. Der Sendeteil 1 bis 3 und der Empfangsteil 5 bis 10 sind durch eine Kette 4 von Übertragungssystemen verbunden. Mit den Bezugszeichen 1 und 10 sind aus der eingangs genannten Zeitschrift "TELCOM REPORT" bekannte Digitalsignal-Multiplexgeräte DSMX 64 K/2 und mit den Bezugszeichen 2 und 9 aus derselben Literaturstelle bekannte Digitalsignal-Multiplexgeräte DSMX 2/8 bezeichnet. Das Bezugszeichen 3 steht für einen Datensicherungscoder und die Bezugszeichen 5 bis 8 für einen Datensicherungsdecoder. Letzterer besteht aus einer integrierten Schaltung 5 mit derselben Typenbezeichnung wie der der
integrierten Schaltung 3, einer Korrekturschaltung 6, einer
Verzögerungsschaltung 7 und einem modulo-2-Addierer 8. Die
mit syn bezeichneten Leitungen übertragen Synchronisierungssignale.

An das Digitalsignal-Multiplexgerät 1 werden drei 64-kbit/s-
Signale und an das Digitalsignal-Multiplexgerät 2 drei
2-Mbit/s-Signale sowie das 2-Mbit/s-Ausgangssignal des
Digitalsignal-Multiplexers 1 angelegt. Das Ausgangssignal
des Digitalsignal-Multiplexgerätes 2 durchläuft den Datensicherungscoder 3. Dieser leitet aus einem oder mehreren
der verschachtelten Eingangssignale Sicherungsbits ab, die
als 64-kbit/s-Signal dem Digitalsignal-Multiplexgerät 1
zugeführt werden und nach Bildung des Ausgangssignals des
Digitalsignal-Multiplexgeräts 2 ihren Platz in den schraffierten Feldern in Fig. 4 finden. Damit empfangsseitig
eine Fehlerkorrektur vorgenommen werden kann, wird das
Nutzsignal gegenüber der Datensicherungsinformation um
eine oder mehrere Datensicherungs-Blocklängen verzögert.

Im Empfangsteil laufen die Daten und die Datensicherungsinformationen über die integrierte Schaltung 5, die Verzögerungsschaltung 7 für eine Verzögerung um eine oder mehrere Datensicherungsblocklängen und über den modulo-2-Addierer
8 zum Digitalsignal-Multiplexgerät 9. In diesem und im
Datensignal-Multiplexgerät 10 wird die Datensicherungsinformation abgetrennt und der integrierten Schaltung 5
zugeführt. Zeitlich parallel werden die Daten und die
Datensicherungsinformation der Kontrollschaltung 6 zugeführt, die die Daten und die Datensicherungsinformation
auf Fehler untersucht. Ihre Ausgangssignale korrigieren
über den modulo-2-Addierer 8 eventuelle Fehler im Hauptnachrichtenfluß.

Die Wirkungsweise der integrierten Schaltungen 3 und 5
sowie der Kontrollschaltung 6 sind im Datenblatt Am9520
der Firma Advanced Micro Devices Inc. vom Feb. 1981 beschrieben.

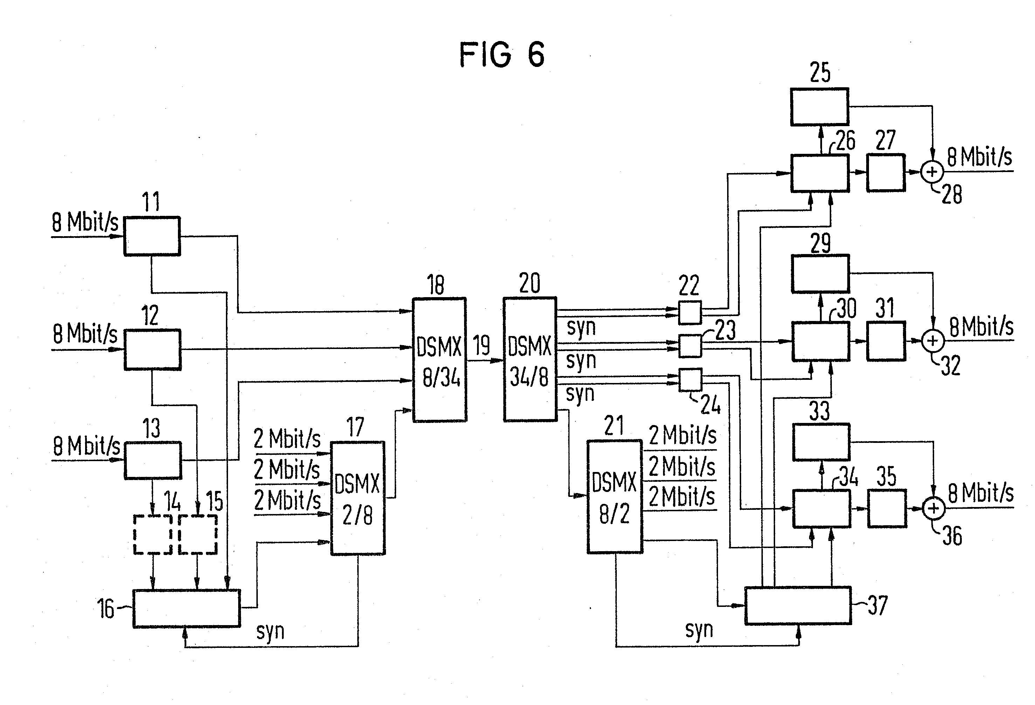

Figur 6 zeigt eine Anordnung, bei dem die Datensicherung
vor dem Multiplexer, bzw. nach dem Demultiplexer vorgenommen wird. Der Sendeteil umfaßt die Elemente 11 bis
18 und der Empfangsteil die Elemente 20 bis 37. Sendeteil und Empfangsteil sind durch eine Übertragungsstrecke 19 oder eine Kette 19 von Übertragungssystemen
verbunden.

Mit dem Bezugszeichen 11 bis 13 sind integrierte Schaltungen des bereits genannten Typs Am9520 bezeichnet.
Die Bezugszeichen 14 und 15 verweisen auf eventuell
notwendige Verzögerungsglieder und das Bezugszeichen
16 bezeichnet einen Dateninformationsmultiplexer.

Mit 22 bis 24, 27, 31 und 35 sind Verzögerungsschaltungen bezeichnet, integrierte Schaltungen des Typs Am9520
tragen die Bezugszeichen 26, 30 und 34, auf Kontrollschaltungen verweisen die Bezugszeichen 25, 29 und 33,
modulo-2-Addierer sind mit 28, 32 und 36 bezeichnet,
ein Dateninformations-Demultiplexer trägt das Bezugszeichen 37.

Bei diesem Ausführungsbeispiel sind drei 8-Mbit/s-Eingänge der Datensicherung unterworfen. Die 8-Mbit/s-
Signale durchlaufen die als Datensicherungscoder wirkenden integrierten Schaltungen 11 bis 13, und geben
dabei jeweils eine Datensicherungsinformation an den
Datensicherungsmultiplexer 16 ab. Eventuell vorhandene
Verzögerungsschaltungen 14 und 15 bewirken, daß die
Datensicherungsinformationen nicht gleichzeitig eintreffen. Der Datensicherungs-Multiplexer 16 bildet aus den Datensicherungsinformationen ein Zeitmultiplexsignal und speist dieses in den vierten 2-Mbit/s-Eingang des Digitalsignal-Multiplexgerätes 17 ein. Dieses gibt wiederum ein Synchronisiersignal syn zurück. Das Digitalsignal-Multiplexgerät 18 fügt die drei 8-Mbit/s-Signale und das Ausgangssignal des Digitalsignal-Multiplexgerätes 17 zusammen.

Auf der Empfangsseite trennt das Digitalsignal-Multiplexgerät 20 die 8-Mbit/s-Signale wieder. Die ersten drei laufen über Verzögerungsschaltungen 22 bis 24 in Datensignaldecoder, wie sie bereits in Fig. 5 beschrieben wurden. Das vierte 8-Mbit/s-Signal des Digitalsignal-Multiplexgerätes 20 wird dem Digitalsignal-Multiplexgerät 21 zugeführt und dort in    2-Mbit/s-Signale getrennt. Das vierte von diesen wird dem Datensicherungsinformations-demultiplexer/37 zugeführt, der die drei Datensicherungsinformationen trennt und einzeln den integrierten Schaltungen 26, 30 und 34 zuführt. Zur richtigen Funktion des Datensicherengsinformationsdemultiplexers 37 muß dieser auch ein Synchronisiersignal syn vom Digitalsignal-Multiplexgerät 21 erhalten. Die integrierten Schaltungen 26, 30 und 34 werden vom Digitalsignal-Multiplexgerät 20 aus synchronisiert.

In den USA, in  anada und in Japan tritt an die Stelle einer Bitrate von 2,048 Mbit/s eine solche von 1,544 Mbit/s und an die Stelle einer Bitrate von 8,448 Mbit/s eine solche von 6,312 Mbit/s. In diesen Ländern läßt sich eine Datensicherungsinformation ohne Nutzinformationsverlust übertragen, wenn man ein europäisches Übertragungssystem höherer Bitrate verwendet, und    dann die für Nutzinformationsübertragung überflüssigen Plätze im Pulsrahmen mit der Datensicherungsinformation belegt.

6 Figuren

3 Patentansprüche

VPA 0124906

83 P 1327 E

Patentansprüche

1. Digitalsignal-Multiplexgerät mit wenigstens einem Multiplexer und wenigstens einem Demultiplexer für Pulsrahmen mit mehreren Nutzinformationskanälen, d a d u r c h   g e k e n n z e i c h n e t , daß ein Datensicherungscoder (3, 3') vorgesehen ist, der dem Multiplexer (1,2) zugeordnet ist, Fehler erkennt und einen oder mehrere Nutzinformationskanäle (NI) oder ganzzahlige Teile wenigstens eines Nutzinformationskanals (NI) mit Datensicherungsinformationen belegt und daß ein Datensicherungsdecoder (5, 5') vorgesehen ist, der dem Demultiplexer (6,7) zugeordnet ist, dem die Datensicherungsinformation zugeführt wird und der eine Fehlerkorrektur durchführt.

2. Digitalsignal-Multiplexgerät nach Anspruch 1, d a d u r c h   g e k e n n z e i c h n e t , daß eine Datensicherung für wenigstens einen Teil der Nutzinformationskanäle (NI) vorgesehen ist.

3. Ditigalsignal-Multiplexgerät nach Anspruch 1, d a d u r c h   g e k e n n z e i c h n e t , daß ein Datensicherungscoder (3, 3') und ein Datensicherungsdecoder (5, 5') vorgesehen sind, die ihre Blocksynchronisierung von der Rahmensynchronisierung des Multiplexers (1,2) bzw. des Demultiplexers (6,7) ableiten.

0124906

## FIG 1

## FIG 2

4 x 212 bit = 848 bit

## FIG 3

4 x 384 bit = 1536 bit

## FIG 4

FIG 5

# FIG 6

0124906